# EUROPÄISCHE PATENTSCHRIFT

(11) **EP 3 569 381 B1**
(45) Veröffentlichungstag und Bekanntmachung des Hinweises auf die Patenterteilung: **17.02.2021**
(21) Anmeldenummer: 19173517.4
(22) Anmeldetag: 09.05.2019
(51) Int. Cl.: B29C 45/42, B29C 45/72, B29C 49/64, B29K 105/00

(54) **HANDHABUNGSPLATTE**
MANIPULATION PLATE
PLAQUE DE MANIPULATION

(30) Priorität: 17.05.2018 DE 102018111875
(43) Veröffentlichungstag der Anmeldung: 20.11.2019
(73) Patentinhaber: MHT Mold & Hotrunner Technology AG, 65239 Hochheim (DE)
(72) Erfinder: BOCK, David, 65239 Hochheim am Main (DE); SÜSS, Peter, 64409 Messel (DE)
(74) Vertreter: WSL Patentanwälte Partnerschaft mbB

(56) Entgegenhaltungen:
- DE-A1-102010 018 121
- US-A1- 2008 256 789

## Beschreibung

Die vorliegende Erfindung betrifft eine Handhabungsplatte zur Handhabung oder Nachbehandlung einer Vielzahl von Formlingen, wobei die Handhabungsplatte eine Mehrzahl von in Spalten und Reihen angeordneten Handhabungs- und/oder Nachbehandlungswerkzeugen aufweist. Eine solche Handhabungsplatte, die als Spritzgießwerkzeugplatte zur Verwendung in einem Spritzgießwerkzeug zur Herstellung von Vorformlingen ausgebildet ist, ist aus der DE 10 2012 102 266 A1 bekannt.

Das Spritzgießen ist eines der wichtigsten Verfahren zur Herstellung von Formlingen bzw. Formteilen. Hierbei wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen. Beispielsweise werden handelsübliche PET-Flaschen durch Streckblasformen eines Hohlkörpervorformlings hergestellt. Dabei wird der Hohlkörpervorformling in einem ersten Schritt mittels Spritzgießen erstellt. Das sich an den Spritzgießvorgang anschließende Streckblasformen kann entweder unmittelbar nach Herstellung des Vorformlings oder zu einem späteren Zeitpunkt erfolgen.

Bei der Herstellung der entsprechenden Spritzgießformen ist ein hoher Aufwand von Nöten, da die Spritzgießform einerseits für sehr hohe Drücke ausgelegt sein muss und andererseits entsprechend beheizte und/oder gekühlte Kanäle aufweisen muss.

Auch wenn die vorliegende Erfindung prinzipiell in Spritzgießwerkzeugen jeglicher Art verwendet werden könnte, wird sie im Folgenden anhand eines Spritzgießwerkzeuges zur Herstellung von PET-Vorformlings beschrieben. Solche Spritzgießwerkzeuge weisen eine Vielzahl, z.B. 96, Kavitäten auf, die in einer sogenannten Kavitätenplatte angeordnet sind und in die entsprechend ausgebildete Werkzeugkerne, die an einer sogenannten Kernplatte angeordnet sind, eingeführt werden. Bei geschlossenem Werkzeug, d.h., wenn der Kern in die entsprechende Kavität eingesetzt ist, wird zwischen dem Kern einerseits und der Kavität andererseits ein Raum, der sogenannte Formraum, gebildet. In diesem Raum wird dann der plastifizierte Kunststoff unter hohem Druck eingespritzt. Sobald der Vorformling genügend abgekühlt ist, kann die Form geöffnet und der Vorformling entnommen werden. Um die Zykluszeiten, d.h. die Zeit von einem Spritzvorgang bis zu dem nächsten Spritzvorgang, zu reduzieren, ist es bereits üblich, den Vorformling zu einem sehr frühen Zeitpunkt aus der Form zu entnehmen, zu dem der Vorformling an seinen Außenflächen bereits fest ist, dessen innerer Bereich jedoch noch flüssig ist. In diesem Zustand wird der Vorformling im Allgemeinen in eine sogenannte Entnahmeplatte übergeben, die einen Satz aus Aufnahmekavitäten aufweist. Dabei umfasst der Aufnahmekavitätensatz mindestens so viele Aufnahmekavitäten wie das Werkzeug Kerne bzw. Kavitäten hat, so dass von jedem Kern der erstarrte Vorformling in eine Aufnahmekavität übergeben werden kann. Während des nächsten Spritzgießvorgangs verbleiben die vorherigen Vorformlinge in den Aufnahmekavitäten, die üblicherweise gekühlt werden.

Es sind auch Ausführungsformen bekannt, bei denen die einzelnen Vorformlinge mittels einer Greifereinheit aus der Form entnommen und in die außerhalb der Werkzeugform angeordnete Entnahmeplatte übergeben werden. Zudem sind Ausführungsformen bekannt, bei denen die Vorformlinge von der Entnahmeplatte in eine Zwischenplatte übergeben werden.

Da der Vorformling zur Abkühlung in der Aufnahmekavität des Standes der Technik eine verhältnismäßig lange Zeit verweilen muss, so dass in der Regel bereits der nächste Vorformling aus dem Spritzgießwerkzeug entnommen werden kann, bevor der Vorformling in der Aufnahmekavität so weit abgekühlt ist, dass er ohne die Gefahr einer Beschädigung entnommen werden kann, ist es bereits üblich, Entnahmeplatten zu verwenden, die mehrere Sätze von Aufnahmekavitäten besitzen, wobei jeder Satz so viele Aufnahmekavitäten aufweist, wie das Spritzgießwerkzeug Vorformlinge pro Spritzzyklus bereitstellt. Die einzelnen Aufnahmekavitätensätze werden dann nacheinander mit Vorformlingen bestückt, so dass der einzelne Vorformling länger als einen Spritzgießzyklus in der Aufnahmekavität verbleiben kann.

Bei der Herstellung von Vorformlingen weisen die Spritzgießwerkzeuge zwei Werkzeughälften auf, die zwischen einer offenen und einer geschlossenen Position hin- und herbewegt werden können. Die eine Werkzeughälfte weist die sogenannte Kavitätenplatte auf, die eine Vielzahl von in Spalten und Reihen angeordnete Kavitäten hat, wobei der Abstand r zwischen benachbarten Kavitäten innerhalb der Reihen größer als der Abstand s zwischen benachbarten Kavitäten innerhalb der Spalten ist. Die andere Werkzeughälfte weist eine Kernplatte auf, die entsprechende Kerne aufweist, die im geschlossenen Zustand der Werkzeugform innerhalb der Kavitäten angeordnet sind. Daher sind auch die Kerne in einer Vielzahl von Spalten und Reihen angeordnet, wobei die Abstände zwischen benachbarten Kernen in Abständen zwischen den Kavitäten entsprechen.

Es versteht sich, dass auch der Abstand der Aufnahmekavitäten der Entnahmeplatte und der Abstand der Handhabungselemente einer Nachbehandlungsplatte dem Abstand der Kavitäten bzw. den Kernen in den Werkzeughälften entsprechen muss.

Grundsätzlich ist es Sache des Herstellers der Spritzgießwerkzeughälften, die Abstände in Spalten- und Reihenrichtung festzulegen. Dabei ist unter Umständen auf die Führung des Heißkanals in der Werkzeughälfte Rücksicht zu nehmen. Darüber hinaus unterscheiden sich die Anzahl der Kerne der Kernplatte bzw. der Kavitäten der Kavitätenplatte von Werkzeug zu Werkzeug.

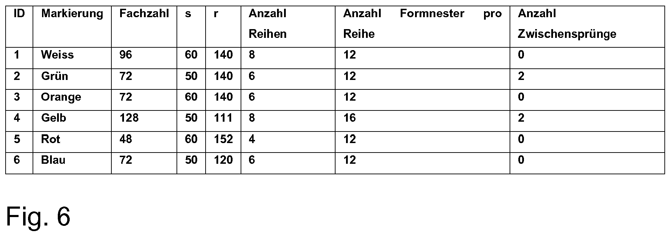

In Figur 6 sind insgesamt sechs Beispiele für übliche Spritzgießwerkzeuge aufgelistet. So sind beispielsweise Werkzeuge mit 96 Kavitäten (Fachzahl 96) bekannt, bei denen die Kavitäten in Spaltenrichtung einen Abstand von 60 mm und in Reihenrichtung einen Abstand von 140 mm haben. Dieses Werkzeug weist acht Reihen auf, wobei in jeder Reihe zwölf Kavitäten angeordnet sind.

Insbesondere die Kavitätenplatte und die Kernplatte werden bei den bekannten Spritzgießwerkzeugen häufiger ausgetauscht. Dies ist beispielsweise notwendig, wenn die Platten verschlissen sind. Allerdings erfolgt häufig ein Austausch auch dann, wenn die Platten noch in Ordnung sind, weil der Werkzeugverwender möglicherweise andere Vorformlinge oder je Spritzgießzyklus mehr Vorformlinge herstellen möchte. In jedem Fall sind dann die Werkzeughälften entsprechend auszutauschen. Wenn die ausgetauschten Werkzeughälften andere Abstände in Reihen- und/oder Spaltenrichtung aufweisen, müssen auch die Entnahmeplatte und die Nachbehandlungsplatte entsprechend ersetzt werden. Dies ist aufwendig und teuer. Insbesondere dann, wenn der Verwender mit ein und demselben Spritzgießwerkzeug verschiedene Vorformlinge im Wechsel herstellen möchte, sind dann bei jedem Wechsel nicht nur die Werkzeughälften, sondern auch die Entnahmeplatte und die Nachbehandlungsplatte zu tauschen.

Die US 2008/256789 A1 und die DE 10 2010 018 121 A1 zeigen Spritzgießmaschinen mit Handhabungsplatten.

Ausgehend von dem beschriebenen Stand der Technik ist es daher Aufgabe der vorliegenden Erfindung, eine Behandlungsplatte zur Verfügung zu stellen, die bei unterschiedlichen Werkzeugen eingesetzt werden kann.

Diese Aufgabe wird erfindungsgemäß gelöst durch eine Handhabungsplatte nach Anspruch 1.

Durch die Veränderbarkeit der Abstände kann die Handhabungsplatte auf unterschiedliche Spritzgießwerkzeuge mit unterschiedlichen Abständen zwischen den Kernen und Kavitäten in Spaltenrichtung und/oder Reihenrichtung leicht angepasst werden. Dies spart Kosten ein und verringert die ansonsten notwendige Vorratshaltung von Handhabungsplatten mit unterschiedlichen Abständen zwischen den Handhabungs- und/oder Nachbehandlungswerkzeugen.

Dabei ist besonders bevorzugt die Handhabungsplatte derart ausgebildet, dass die Abstände sowohl innerhalb der Spalten und/oder innerhalb der Reihen veränderbar sind.

Erfindungsgemäß weist die Handhabungsplatte ein Grundelement und eine Mehrzahl von an dem Grundelement befestigten oder befestigbaren Trägerelementen auf, wobei jedes Trägerelement Werkzeugaufnahmen zur Aufnahme von Handhabungs- und/oder Nachbehandlungswerkzeugen aufweist. Eine Aufnahme kann beispielsweise eine Bohrung sein, an der ein Handhabungs- und/oder Nachbehandlungswerkzeug befestigt werden kann.

Beispielsweise können die Trägerelemente jeweils alle in einer Spalte angeordneten Handhabungs- und/oder Nachbehandlungswerkzeuge tragen bzw. entsprechend hierfür vorgesehene Aufnahmen haben.

Durch eine Relativbewegung eines Trägerelementes zu dem Grundelement wird somit die komplette Spalte der Handhabungs- und/oder Nachbehandlungswerkzeuge relativ zum Grundelement bewegt.

Das Grundelement kann mehrteilig ausgebildet sein. Beispielsweise kann das Grundelement aus mehreren Profilteilen zusammengesetzt sein. Alternativ kann das Grundelement aber auch einteilig, z.B. in Form einer Platte ausgebildet sein.

Vorzugsweise ist zumindest ein Trägerelement in einer ersten und in einer zweiten Position an dem Grundelement befestigbar.

Beispielsweise könnte für jedes Trägerelement die Befestigung an zwei unterschiedlichen Positionen vorgesehen sein, so dass dann, wenn alle Trägerelemente an ihrer ersten Position befestigt sind, der Abstand zwischen benachbarten Spalten größer oder kleiner ist als in einer Situation, in der alle Trägerelemente an ihrer zweiten Position befestigt sind. Am besten sind die Trägerelemente in jeder, zwischen der ersten und der zweiten Position angeordneten Zwischenposition an dem Grundelement befestigbar. Durch diese stufenlose Befestigungsmöglichkeit ergibt sich die größte Flexibilität der Handhabungsplatte. Allerdings muss bei der Montage der Trägerelemente auf dem Grundelement auf eine sehr genaue Justierung geachtet werden. Sollten die Abstände zwischen den einzelnen benachbarten Reihen von Handhabungs- und/oder Nachbehandlungswerkzeugen nicht exakt korrekt sein, kann das Spritzgießwerkzeug und/oder die Handhabungsplatte im Betrieb beschädigt werden.

Es kann daher von Vorteil sein, wenn für die üblichen Abstände, wie sie beispielsweise in Figur 6 dargestellt sind, entsprechende Positionen vorgegeben sind und am besten entsprechend markiert sind. Beispielsweise könnte das Grundelement entsprechende Bohrungen aufweisen, mit denen die Trägerelemente an dem Grundelement befestigt werden können. Dabei könnte das Grundelement mehrere Sätze aus Bohrungen aufweisen, wobei jeder Satz entsprechend markiert, z.B. mittels einer farbigen Markierung, ist. Mit Hilfe einer Zuordnungstabelle kann dann der Benutzer für einen bestimmten Werkzeugtyp die entsprechende Markierung auswählen und die Trägerelemente in den entsprechend markierten Bohrungen des Grundelementes befestigen.

Darüber hinaus ist in einer vorteilhaften Ausführungsform vorgesehen, dass die Werkzeugaufnahmen der Trägerelemente derart ausgebildet sind, dass eine Mehrzahl von Handhabungs- und/oder Nachbehandlungswerkzeugen mit unterschiedlichen Abständen an den Trägerelementen befestigt werden können. Mit anderen Worten werden hier nicht nur die Trägerelemente relativ zueinander in unterschiedlichen Positionen angeordnet, sondern zudem auf einem Trägerelement die Aufnahmen bzw. Handhabungs- und/oder Behandlungswerkzeuge mit unterschiedlichen Abständen angeordnet.

In einer bevorzugten Ausführungsform lassen sich die Werkzeugaufnahmen in zwei unterschiedlichen Positionen und jeder dazwischenliegenden Opposition am Trägerelement befestigen. Beispielsweise könnte das Trägerelement einen Nut und die Handhabungs- und/oder Nachbehandlungswerkzeuge entsprechende Nutensteine aufweisen, die innerhalb der Nut verschoben werden können, um die Werkzeuge an der gewünschten Position zu befestigen.

Erfindungsgemäß ist vorgesehen, dass die Werkzeugaufnahmen der Trägerelemente entlang einer Trägerelementachse angeordnet sind, wobei jedes Trägerelement mindestens zwei, vorzugsweise vier Aufnahmeflächen aufweist, wobei auf jeder Aufnahmefläche Werkzeugaufnahmen entlang der Trägerelementachse angeordnet sind, wobei sich die Abstände zwischen den Werkzeugaufnahmen in den Aufnahmeflächen unterscheiden.

In einer weiteren bevorzugten Ausführungsform ist vorgesehen, dass auf einer Aufnahmefläche mehrere Sätze von Werkzeugaufnahmen vorgesehen sind, wobei sich die Sätze durch unterschiedliche Abstände zwischen benachbarten Werkzeugaufnahmen unterscheiden. Ein anderer Abstand zwischen den Werkzeugaufnahmen kann dann durch Auswahl eines anderen Satzes von Werkzeugaufnahmen verwirklicht werden. Gegebenenfalls muss das Trägerelement hierzu relativ zu dem Grundelement verschoben oder um 180° um eine Achse senkrecht zum Grundelement gedreht werden.

Sind die Aufnahmen durch Bohrungen gebildet, so kann man leicht nachvollziehen, dass die Trägerelemente in unterschiedlichen Positionen, die sich durch eine Drehung des Trägerelementes um seine Trägerelementachse unterscheiden, an dem Grundelement befestigt werden können, wobei dann jeweils eine andere Aufnahmefläche von dem Grundelement abgewandt angeordnet ist und diese Aufnahmefläche entsprechend beabstandete Bohrungen aufweist. Der Abstand zwischen den Handhabungs- und/oder Nachbehandlungswerkzeugen kann somit durch Lösen der Trägerelemente vom Grundelement, durch Drehen der Trägerelemente um die Trägerelementachse und erneutes Befestigen der Trägerelemente am Grundelement erfolgen.

In einer weiteren bevorzugten Ausführungsform ist vorgesehen, dass die Trägerelemente als Hohlkammerprofil mit polygonalem Querschnitt, vorzugsweise mit rechteckigem Querschnitt, ausgebildet sind.

Hohlkammerprofile sind kostengünstig herzustellen und weisen eine ausreichende Stabilität auf. Dadurch, dass sie einen polygonalen Querschnitt haben, können sie um die Trägerelementachse gedreht werden und wieder mit dem Grundelement befestigt werden.

Die Verwendung von Hohlkammerprofilen hat zudem den Vorteil, dass die Profile häufig eine Mehrzahl von Hohlkammern bereitstellen, so dass jeder Aufnahmefläche eine Hohlkammer zugeordnet ist. Dies ermöglicht es, dass die Hohlkammern des Hohlkammerprofils als Fluidzu- bzw. -abführung verwendet werden können. Somit kann die Werkzeugaufnahme so ausgebildet sein, dass sie eine Fluidverbindung mit der zugeordneten Hohlkammer aufweist. Beispielsweise könnte die Aufnahme als Bohrung ausgebildet sein, welche die Aufnahmefläche mit der zugeordneten Hohlkammer verbindet.

In einer weiteren bevorzugten Ausführungsform ist mindestens ein Verschlusselement vorgesehen, mit welchem die Fluidverbindung zwischen einer Werkzeugaufnahme und der zugeordneten Hohlkammer verschlossen werden kann.

Sind zum Beispiel mehrere unterschiedliche Werkzeugaufnahmen mit der Hohlkammer verbunden, so müssen die nicht benötigten Aufnahmen mit Hilfe des Verschlusselementes verschlossen werden, um zu verhindern, dass über die Hohlkammer zu- oder abgeführtes Fluid über die nicht benötigten Aufnahmen entweicht.

Darüber hinaus gibt es Werkzeuge mit einem sogenannten Zwischensprung, d.h. bei denen innerhalb einer Reihe oder Spalte von Kavitäten bzw. Kernen ein Kern bzw. eine Kavität fehlt, so dass der Abstand zwischen benachbarten Kernen und Kavitäten im Bereich des Zwischensprungs doppelt so groß ist. Dieser Zwischensprung kann mit dem erfindungsgemäßen System verwirklicht werden, indem eine Werkzeugaufnahme mit dem Verschlusselement verschlossen wird.

Darüber hinaus sind auch Zwischensprünge denkbar, bei denen der Abstand zwischen benachbarten Kernen und Kavitäten im Bereich des Zwischensprungs nicht doppelt so groß ist, sondern z.B. 1,3 mal so groß wie der sonstige Abstand zwischen benachbarten Kernen und Kavitäten ist. In diesem Fall kann nicht einfach eine Werkzeugaufnahme verschlossen werden. Es müssen entweder die Werkzeugaufnahmen stufenlos verstellbar sein oder ein entsprechender Satz von Aufnahmen bereitgestellt werden. Beispielsweise könnte das Trägerelement eine Aufnahmefläche aufweisen, die keine Aufnahmen aufweist, in welche jedoch bei Bedarf entsprechende als Aufnahme dienende Bohrungen eingebracht werden können.

Die Handhabungs- und/oder Nachbehandlungswerkzeuge können Aufnahmekavitäten zur Aufnahme von Vorformlingen sein. In diesem Fall wird die erfindungsgemäße Handhabungsplatte immer dann zwischen die geöffneten Werkzeughälften gefahren, wenn dort entsprechende Vorformlinge entnommen werden sollen.

Mit ein und derselben Handhabungsplatte können daher verschiedene Spritzgießwerkzeuge bedient werden.

In einer weiteren Ausführungsform ist vorgesehen, dass die Handhabungs- und/oder Nachbehandlungswerkzeuge Greifwerkzeuge zum Greifen von Vorformlingen, Kühlstifte, die dafür vorgesehen sind, ins Innere der Vorformlinge bewegt zu werden, um dort entweder ein Fluid zuzuführen oder ein Fluid abzusaugen, und/oder Prägewerkzeuge, die dafür vorgesehen sind, ins Innere der Vorformlings eingeführt zu werden, um dort mit den Vorformlingen in Kontakt zu treten und deren Form zu verändern, sind.

Beispielsweise könnte eine Entnahmeplatte drei Sätze von Aufnahmekavitäten aufweisen, wobei immer dann, wenn die Entnahmeplatte in das geöffnete Werkzeug gefahren wird, ein Satz Vorformlinge in einen Satz Aufnahmekavitäten übergeben wird. Beim darauffolgenden Einfahren in das Werkzeug werden die Vorformlinge dann in den zweiten Satz Aufnahmekavitäten übergeben und beim dritten Mal des Einfahrens in das Werkzeug in den dritten Satz von Aufnahmekavitäten übergeben. Dann wiederholt sich der Zyklus, d.h. es wird wieder in den ersten Satz von Aufnahmekavitäten übergeben.

Während die Entnahmeplatte nicht zwischen den geöffneten Werkzeugplatten positioniert ist, kann der Vorformling, der in der Aufnahmekavität gehalten wird, bearbeitet werden. Beispielsweise könnten in einen ersten Satz Vorformlinge Kühlstifte eingebracht werden, über die ein Kühlfluid entweder in den Vorformling eingebracht oder aus diesem abgesaugt werden kann. Dies hat zur Folge, dass die Innenfläche des Vorformlings schneller abgekühlt wird.

Des Weiteren könnten zur gleichen Zeit Greifwerkzeuge an einen zweiten Satz von Vorformlingen angreifen, der am längsten im Nachbehandlungswerkzeug verblieben ist, da dieser als nächstes entnommen werden muss.

Schließlich gibt es Anwendungsfälle, in denen der Vorformling in der Nachbehandlungsplatte gestreckt wird. Dazu könnte ein entsprechendes Prägewerkzeug vorgesehen sein, welches in einen dritten Satz von Vorformlingen eingreift, welcher das Spritzgießwerkzeug gerade verlassen hat und daher noch die höchste Temperatur aufweist.

Die vorliegende Erfindung betrifft darüber hinaus ein Spritzgießwerkzeug, welches eine Entnahmeplatte und/oder eine Zwischenplatte und/oder eine Nachbehandlungsplatte hat, die entsprechend der erfindungsgemäßen Handhabungsplatte ausgebildet ist.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:
- Figur 1: eine perspektivische Ansicht einer erfindungsgemäßen Handhabungsplatte,
- Figur 2: eine Draufsicht auf die Handhabungsplatte von Figur 1,
- Figur 3: eine Seitenansicht auf die Handhabungsplatte von Figur 1,
- Figur 4: eine perspektivische Ansicht eines Trägerelements und
- Figur 5: eine Stirnansicht auf das Trägerelement von Figur 4.

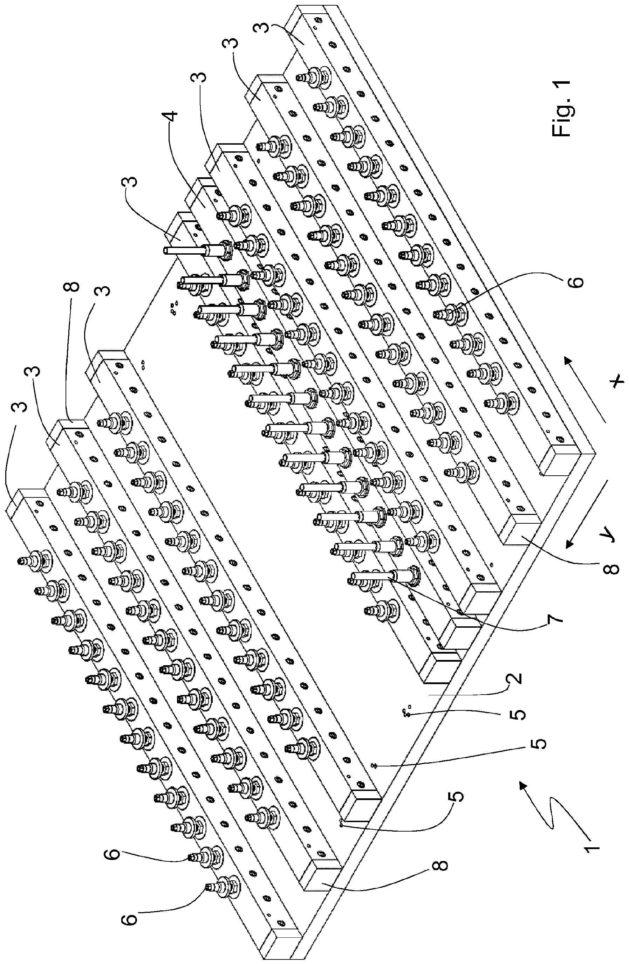

In Figur 1 ist eine erfindungsgemäße Handhabungsplatte 1 dargestellt. Diese Handhabungsplatte 1 weist ein Grundelement 2 auf, welches als Platte ausgebildet ist. Auf dem Grundelement 2 sind eine Vielzahl von Trägerelementen 3 angeordnet. Auf dem Grundelement 2 sind eine Vielzahl von Positionierungsbohrungen 5 vorgesehen, die zur Positionierung der Trägerelemente 3 an dem Grundelement 2 verwendet werden können. So können in die Positionierungsbohrungen entsprechende Stifte gesteckt werden, die auch in entsprechende Positionierungsbohrungen in den Trägerelementen 3 eingreifen.

In der gezeigten Ausführungsform hat das Grundelement 2 verschiedene Gruppen von Bohrungen 5, die derart angeordnet sind, dass der Abstand in γ-Richtung zwischen den einzelnen Trägerelementen 3 bei Verwendung von unterschiedlichen Gruppen von Bohrungen unterschiedlich groß ist. In der gezeigten Ausführungsform sind insgesamt sieben Trägerelemente 3 an einer ersten Gruppe von Bohrungen 5 mit dem Grundelement 2 verbunden. Zwischen dem dritten und vierten Trägerelement (von links aus gesehen) ist ein Trägerelement ausgelassen, so dass der Abstand zwischen dem dritten und vierten Trägerelement (von links aus gesehen) doppelt so groß ist, wie zwischen den anderen Trägerelementen 3. Jedes Trägerelement 3 hat im gezeigten Beispiel zwölf Greiferelemente 6, die in x-Richtung in einer Spalte angeordnet sind. Der Abstand zwischen benachbarten Greiferelementen 6 ist überall gleich. Die Greiferelemente 6 greifen in Hohlkammerformlinge ein, die in einer Aufnahmeplatte gehalten sind. In der gezeigten Ausführungsform sind die Greiferelemente 6 druckluftbetrieben, so dass beim Beaufschlagen des Greiferelementes mit Druckluft sich dieses ausdehnt und die Innenseite des Vorformlings ergreift. Durch eine Relativbewegung zwischen der Handhabungsplatte 1 und der Entnahmeplatte (nicht gezeigt) können die von den Greiferelementen 6 gehaltenen Hohlkörperformlingen aus der Entnahmeplatte entnommen werden. Alternativ könnten die Greiferelemente auch derart ausgebildet sein, dass sie mittels Vakuum aktiviert werden können.

Häufig weist die Entnahmeplatte mehr Aufnahmekavitäten auf als Vorformlinge in einem Spritzgießzyklus hergestellt werden. Beispielsweise kann die Entnahmeplatte doppelt so viele Aufnahmekavitäten aufweisen, so dass zwei Sätze von Aufnahmekavitäten vorgesehen sind, die im Wechsel mit Vorformlingen bestückt werden. Dies hat den Vorteil, dass die Vorformlinge länger in der Entnahmeplatte verbleiben können, bevor sie wieder entnommen werden müssen, um Platz für den nächsten Satz von Vorformlingen zu machen.

Während der Zeit, in welcher die Vorformlinge in der Entnahmeplatte gehalten werden, kann die Abkühlung des Vorformlings beschleunigt werden, indem ein Kühlstift 7, über den ein Kühlfluid in den Innenraum des Hohlkörpervorformlings zugeführt oder Luft aus diesem abgesaugt wird.

Zu diesem Zweck weist die erfindungsgemäße Handhabungsplatte 1 ein weiteres Trägerelement 4 auf, das im gezeigten Beispiel zwischen zwei Trägerelementen 3 angeordnet ist, welche ein Greiferelement tragen. Der Abstand zwischen benachbartem Greiferelement 6 eines Trägerelementes 3 und dem Kühlstiftes 7 eines Trägerelementes 4 ist im gezeigten Beispiel exakt halb so groß wie der Abstand zwischen zwei in γ-Richtung beabstandeten Greiferelementen 6. Dies hat zur Folge, dass die Greiferelemente in jede zweite Aufnahmekavität der Entnahmeplatte eintauchen, während in die dazwischenliegende Kavität der Kühlstift 7 eintaucht, um die darin gehaltenen Hohlkörperformlinge zu kühlen.

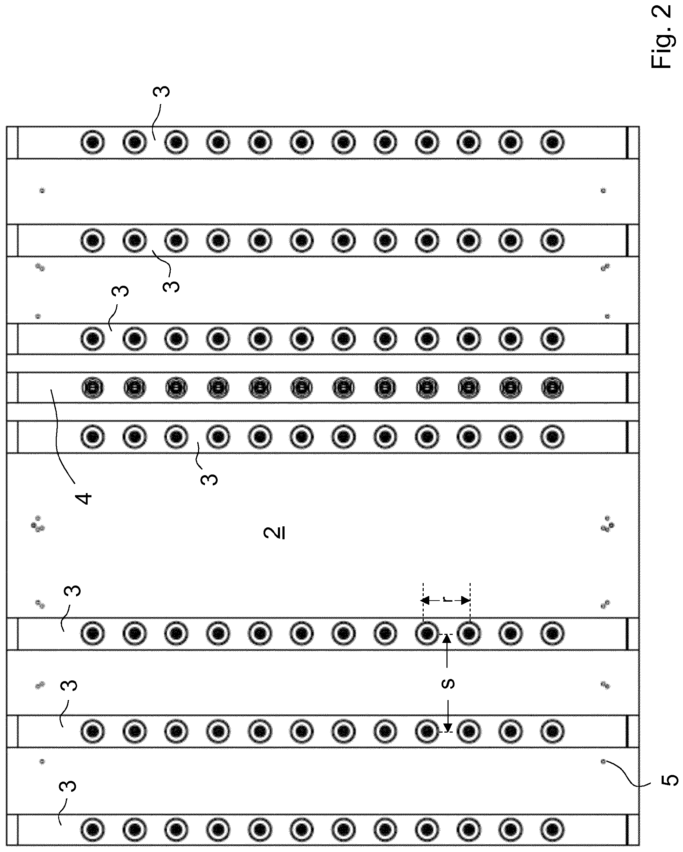

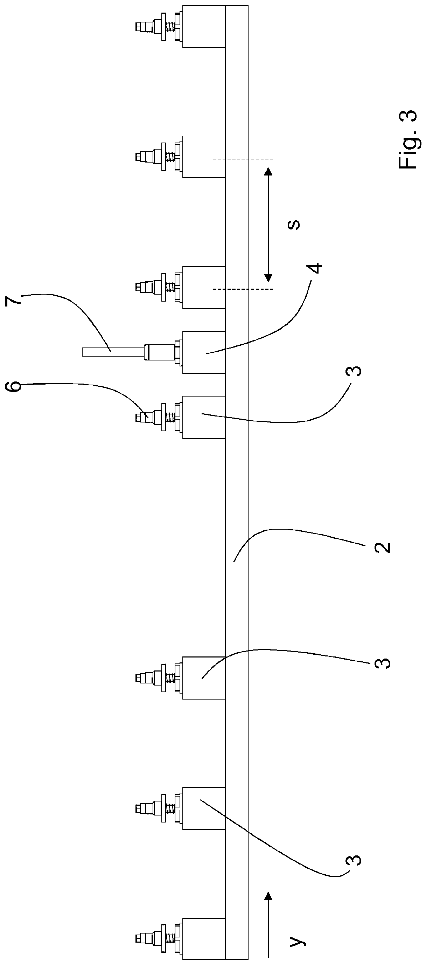

Im Grunde genommen müssten bei der in Figur 1 gezeigten Ausführungsform weitere Trägerelemente 4 vorgesehen sein, die jeweils zwischen bzw. neben einem Trägerelement 3, welches Greiferelemente 6 trägt, angeordnet sein. Diese wurden jedoch der Übersichtlichkeit halber hier nicht dargestellt. Die Figuren 2 und 3 zeigen Draufsichten bzw. Seitenansichten auf die erfindungsgemäße Handhabungsplatte.

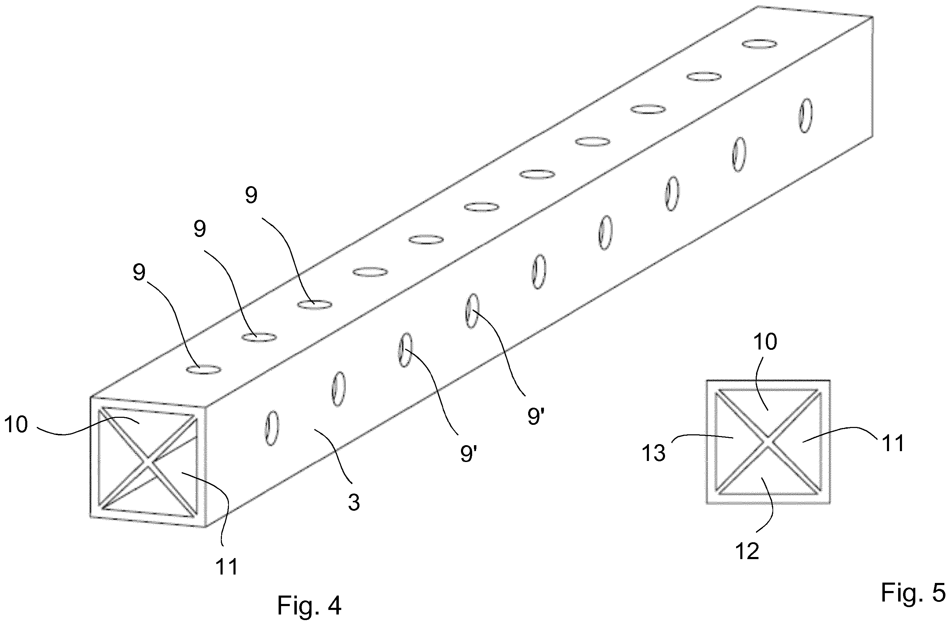

In den Figuren 4 und 5 ist ein Trägerelement 3 im Detail in einer perspektivischen Ansicht und einer Schnittansicht dargestellt. Man erkennt, dass jedes Trägerelement 3 aus einem Hohlkammerprofil besteht. Das Hohlkammerprofil selbst besteht in der gezeigten Ausführungsform aus vier Hohlkammern 10, 11, 12 und 13. In Figur 4 hat das Hohlkammerprofil 3 an seiner Oberseite eine Reihe von Bohrungen 9, die die obere Fläche des Hohlkammerprofils mit der Hohlkammer 10 verbinden. In diesen Bohrungen 9 können die Greiferelemente 6 befestigt werden. Über die Hohlkammer 10 kann dann Druckluft zu jedem Greiferelement 6 einer Spalte zugeführt werden.

Man erkennt, dass das Trägerelement 3 an seiner Seitenfläche, die in Figur 4 nach rechts zeigt, Bohrungen 9' aufweist, die die seitliche Fläche mit der Hohlkammer 11 verbinden.

Falls der Abstand zwischen den Greiferelementen 6 geändert werden soll, kann das Trägerelement von dem Grundelement 2 gelöst und um eine Längsachse gedreht werden, so dass nun die Bohrungen 9' oben liegen, d.h. an der dem Grundelement 2 abgewandten Seite. Werden nun die Greiferelemente 6 in den Bohrungen 9' befestigt, so können nun nur noch neun Greiferelemente innerhalb einer Spalte angeordnet werden im Gegensatz zu den vorherigen elf Greiferelementen, der Abstand zwischen den einzelnen Greiferelementen 6 ist jedoch größer.

In gleicher Weise können auch noch die anderen Außenflächen des Hohlkammerprofils mit entsprechend beabstandeten Bohrungen versehen sein.

Das Hohlkammerprofil selbst muss nicht aus einer Mehrzahl von Hohlkammern bestehen. Sind jedoch alle Bohrungen mit derselben Hohlkammer verbunden, so müssen die nicht benötigten Bohrungen verschlossen werden, um eine effektive Zuführung von Druckluft zu gewährleisten.

Wenn an dem Trägerelement 3, wie in Figur 1 gezeigt ist, Nachbehandlungsstifte 7 befestigt werden, so kann über die entsprechende Hohlkammer dann ein Kühlfluid zugeführt oder abgesaugt werden. Die Stirnflächen der Trägerelement sind bei der gezeigten Ausführungsform durch Abschlusskappen 8 verschlossen.

Des weiteren ist es in einer Ausführungsform möglich, dass an einem Trägerelement mehrere Sätze von Aufnahmen, z.B. einen Satz zur Aufnahme von Greifwerkzeugen und einen Ersatz zur Aufnahme von Kühlstiften, angeordnet sind.

### Bezugszeichenliste

- 1: Handhabungsplatte
- 2: Grundelement
- 3: Trägerelement
- 4: Trägerelemente
- 5: Bohrungen
- 6: Greiferelemente
- 7: Kühlstift
- 8: Abschlusskappe
- 9, 9': Bohrungen
- 10: Hohlkammer
- 11: Hohlkammer
- 12: Hohlkammer
- 13: Hohlkammer

## Patentansprüche

1. Handhabungsplatte (1) zur Handhabung oder Nachbehandlung einer Vielzahl von Formlingen, wobei die Handhabungsplatte (1) eine Mehrzahl von in Spalten und Reihen angeordneten Handhabungs- und/oder Nachbehandlungswerkzeuge aufweist, wobei die Abstände zwischen den Handhabungs- und/oder Nachbehandlungswerkzeugen innerhalb der Spalten und/oder innerhalb der Reihen veränderbar ist, wobei die Handhabungsplatte (1) ein Grundelement (2) und eine Mehrzahl von an dem Grundelement (2) befestigten oder befestigbaren Trägerelemente (3, 4) aufweist, wobei jedes Trägerelement (3, 4) Werkzeugaufnahmen zur Aufnahme von Handhabungs- und/oder Nachbehandlungswerkzeugen aufweist, wobei die Werkzeugaufnahmen der Trägerelemente (3, 4) entlang einer Trägerelementachse angeordnet sind, **dadurch gekennzeichnet, dass** jedes Trägerelement (3, 4) mindestens zwei, vorzugsweise vier Aufnahmeflächen aufweist, wobei auf jeder Aufnahmefläche Werkzeugaufnahmen entlang der Trägerelementachse angeordnet sind, wobei sich die Abstände zwischen den Werkzeugaufnahmen in den Aufnahmeflächen unterscheiden.

2. Handhabungsplatte (1) nach Anspruch 1, **dadurch gekennzeichnet, dass** Trägerelemente (3, 4) in einer ersten und einer zweiten Position an dem Grundelement (2) befestigbar sind, wobei der Abstand zwischen benachbarten Trägerelementen (3, 4) in der ersten Position kleiner als in der zweiten Position ist, wobei vorzugsweise die Trägerelemente (3, 4) in jeder, zwischen der ersten und der zweiten Position angeordneten Zwischenposition an dem Grundelement (2) befestigbar sind.

3. Handhabungsplatte (1) nach Anspruch 1 oder 2, **dadurch gekennzeichnet, dass** die Werkzeugaufnahmen der Trägerelemente (3, 4) derart ausgebildet sind, dass eine Mehrzahl von Handhabungs- und/oder Nachbehandlungswerkzeugen mit unterschiedlichen Abständen an den Trägerelementen (3, 4) befestigt werden können.

4. Handhabungsplatte (1) nach einem der Ansprüche 1-3, **dadurch gekennzeichnet, dass** die Trägerelemente (3, 4) als Hohlkammerprofil mit polygonalem Querschnitt, vorzugsweise mit rechteckigem Querschnitt, ausgebildet sind.

5. Handhabungsplatte (1) nach Anspruch 4, **dadurch gekennzeichnet, dass** das Hohlkammerprofil eine Mehrzahl von Hohlkammern (10, 11, 12, 13) bereitstellt, wobei jeder Aufnahmefläche eine Hohlkammer (10, 11, 12, 13) zugeordnet ist, sodass jede Werkzeugaufnahme eine Fluidverbindung mit der zugeordneten Hohlkammer (10, 11, 12, 13) aufweist.

6. Handhabungsplatte (1) nach Anspruch 5, **dadurch gekennzeichnet, dass** mindestens ein Verschlusselement vorgesehen ist, mit welchem die Fluidverbindung zwischen einer Werkzeugaufnahme und der zugeordneten Hohlkammer (10, 11, 12, 13) verschließbar ist.

7. Handhabungsplatte (1) nach einem der Ansprüche 1-6, **dadurch gekennzeichnet, dass** die Handhabungs- und/oder Nachbehandlungswerkzeuge Aufnahmekavitäten zur Aufnahme von Vorformlingen sind.

8. Handhabungsplatte (1) nach einem der Ansprüche 1-6, **dadurch gekennzeichnet, dass** die Handhabungs- und/oder Nachbehandlungswerkzeuge Greifwerkzeuge zum Greifen von Vorformlingen, Kühlstifte, die dafür vorgesehen sind, ins Innere eines Vorformlings bewegt zu werden, um dort entweder ein Fluid zuzuführen oder ein Fluid abzusaugen, und/oder Prägewerkzeuge, die dafür vorgesehen sind, ins Innere eines Vorformlings eingeführt zu werden, um dort mit dem Vorformling in Kontakt zu treten und dessen Form zu verändern, sind.

9. Spritzgießwerkzeug zur Herstellung von Vorformlingen mit einer Kavitätenplatte und einer Kernplatte, die relativ zueinander zwischen einer geschlossenen Position, in welcher die Kerne der Kernplatte innerhalb der Kavitäten der Kavitätenplatte angeordnet sind, und einer geöffneten Position, in welcher die Kavitätenplatte von der Kernplatte weiter entfernt ist als in der geschlossenen Position hin- und herbewegt werden kann, wobei des Weiteren eine Entnahmeplatte und eine Nachbehandlungsplatte vorgesehen sind, wobei die Entnahmeplatte in der geöffneten Position zwischen die Kernplatte und die Kavitätenplatte bewegt werden kann, um die hergestellten Vorformlinge aufzunehmen, die Nachbehandlungsplatte eine Mehrzahl von Handhabungs- und/oder Nachbehandlungswerkzeugen aufweist und die Nachbehandlungsplatte relativ zu der Entnahmeplatte oder einer Zwischenplatte zwischen einer Nachbehandlungsposition und einer Warteposition hin und her bewegt werden kann, wobei in der Nachbehandlungsposition zumindest ein Handhabungs- und/oder Nachbehandlungswerkzeug mit einem von der Entnahmeplatte oder der Zwischenplatte gehaltenen Vorformling in Kontakt tritt oder in diesen Fluid fördert oder Fluid aus diesem entfernt, **dadurch gekennzeichnet, dass** die Entnahmeplatte und/oder die Zwischenplatte und/oder die Nachbehandlungsplatte eine Handhabungsplatte (1) nach einem der Ansprüche 1-8 ist.

## Claims

1. A handling plate (1) for handling or aftertreatment of a plurality of mouldings, wherein the handling plate (1) has a plurality of handling and/or aftertreatment tools arranged in columns and rows, wherein the spacings between the handling and/or aftertreatment tools are variable within the columns and/or within the rows, wherein the handling plate (1) has a base element (2) and a plurality of carrier elements (3, 4) which are or can be fixed to the base element (2), wherein each carrier element (3, 4) has tool receiving means for receiving handling and/or aftertreatment tools, wherein the tool receiving means of the carrier elements (3, 4) are arranged along a carrier element axis, **characterised in that** each carrier element (3, 4) has at least two and preferably four receiving surfaces, wherein tool receiving means are arranged on each receiving surface along the carrier element axis, wherein the spacings between the tool receiving means in the receiving surfaces differ.

2. A handling plate (1) according to claim 1 **characterised in that** carrier elements (3, 4) can be fixed to the base element (2) in a first and a second position, wherein the spacing between adjacent carrier elements (3, 4) is less in the first position than in the second position, wherein preferably the carrier elements (3, 4) can be fixed to the base element (2) in any intermediate position arranged between the first and second positions.

3. A handling plate (1) according to claim 1 or claim 2 **characterised in that** the tool receiving means of the carrier elements (3, 4) are of such a configuration that a plurality of handling and/or aftertreatment tools can be fixed to the carrier elements (3, 4) at different spacings.

4. A handling plate (1) according to one of claims 1 to 3 **characterised in that** the carrier elements (3, 4) are in the form of a hollow chamber profile member of polygonal cross-section, preferably of rectangular cross-section.

5. A handling plate (1) according to claim 4 **characterised in that** the hollow chamber profile member provides a plurality of hollow chambers (10, 11, 12, 13), wherein a hollow chamber (10, 11, 12, 13) is associated with each receiving surface so that each tool receiving means has a fluid communication with the associated hollow chamber (10, 11, 12, 13).

6. A handling plate (1) according to claim 5 **characterised in that** there is provided at least one closure element with which the fluid communication between a tool receiving means and the associated hollow chamber (10, 11, 12, 13) is closable.

7. A handling plate (1) according to one of claims 1 to 6 **characterised in that** the handling and/or aftertreatment tools are receiving cavities for receiving preforms.

8. A handling plate (1) according to one of claims 1 to 6 **characterised in that** the handling and/or aftertreatment tools are gripping tools for gripping preforms, cooling pins which are provided to be moved into the interior of a preform in order there either to supply a fluid or to suck a fluid away, and/or embossing tools which are provided to be introduced into the interior of a preform in order there to come into contact with the preform and change the shape thereof.

9. An injection moulding tool for producing preforms comprising a cavity plate and a core plate which can be reciprocated relative to each other between a closed position in which the cores of the core plate are arranged within the cavities of the cavity plate and an opened position in which the cavity plate is further away from the core plate than in the closed position, wherein moreover there are provided a removal plate and an aftertreatment plate, wherein the removal plate can be moved in the opened position between the core plate and the cavity plate to receive the produced preforms, the aftertreatment plate has a plurality of handling and/or aftertreatment tools and the aftertreatment plate can be reciprocated relative to the removal plate or an intermediate plate between an aftertreatment position and a waiting position, wherein in the aftertreatment position at least one handling and/or aftertreatment tool comes into contact with a preform held by the removal plate or the intermediate plate or conveys fluid into or removes fluid from same, **characterised in that** the removal plate and/or the intermediate plate and/or the aftertreatment plate is a handling plate according to one of claims 1 to 8.

## Revendications

1. Plaque de manipulation (1) pour la manipulation ou le post-traitement d'une pluralité de pièces moulées, la plaque de manipulation (1) comprenant une pluralité d'outils de manipulation et/ou de post-traitement disposés en colonnes et en lignes, les distances entre les outils de manipulation et/ou de post-traitement pouvant être modifiées à l'intérieur des colonnes et/ou à l'intérieur des lignes, la plaque de manipulation (1) comprenant un élément de base (2) et une pluralité d'éléments porteurs (3, 4) fixés ou aptes à être fixés sur l'élément de base (2), chaque élément porteur (3, 4) comprenant des logements d'outil destinés à recevoir des outils de manipulation et/ou de post-traitement, les logements d'outil des éléments porteurs (3, 4) étant disposés le long d'un axe d'élément porteur,
**caractérisé en ce que** chaque élément porteur (3, 4) comprend au moins deux, de préférence quatre surfaces de réception, des logements d'outil étant disposés sur chaque surface de réception le long de l'axe d'élément porteur, les distances entre les logements d'outil dans les surfaces de réception étant différentes les unes des autres.

2. Plaque de manipulation (1) selon la revendication 1, **caractérisé en ce que** des éléments porteurs (3, 4) peuvent être fixés sur l'élément de base (2) à une première et une deuxième position, la distance entre des éléments porteurs (3, 4) avoisinants étant plus petite dans la première position que dans la deuxième position, de préférence, les éléments porteurs (3, 4) étant aptes à être fixés sur l'élément de base (2) dans toute position intermédiaire située entre la première et la deuxième position.

3. Plaque de manipulation (1) selon la revendication 1 ou 2, **caractérisé en ce que** les logements d'outil des éléments porteurs (3, 4) sont configurés de façon telle qu'une pluralité d'outils de manipulation et/ou de post-traitement puissent être fixés sur les éléments porteurs (3, 4) à des distances différentes.

4. Plaque de manipulation (1) selon l'une des revendications 1 à 3, **caractérisé en ce que** les éléments porteurs (3, 4) sont configurés comme profilé à chambres creuses avec une section transversale polygonale, de préférence avec une section transversale rectangulaire.

5. Plaque de manipulation (1) selon la revendication 4, **caractérisé en ce que** le profilé à chambres creuses met à disposition une pluralité de chambres creuses (10, 11, 12, 13), à chaque surface de réception étant associée une chambre creuse (10, 11, 12, 13), si bien que chaque logement d'outil comprend une liaison fluidique avec la chambre creuse (10, 11, 12, 13) associée.

6. Plaque de manipulation (1) selon la revendication 5, **caractérisé en ce qu'**il est prévu au moins un élément de fermeture par lequel la liaison fluidique entre un logement d'outil et la chambre creuse (10, 11, 12, 13) associée peut être fermée.

7. Plaque de manipulation (1) selon l'une des revendications 1 à 6, **caractérisé en ce que** les outils de manipulation et/ou de post-traitement sont des cavités de réception destinées à la réception de préformes.

8. Plaque de manipulation (1) selon l'une des revendications 1 à 6, **caractérisé en ce que** les outils de manipulation et/ou de post-traitement sont des outils de préhension pour la préhension de préformes, des broches de refroidissement prévues pour être déplacées à l'intérieur d'une préforme afin d'y apporter un fluide ou aspirer un fluide, et/ou des outils d'emboutissage qui sont prévus pour être introduits à l'intérieur d'une préforme afin d'y entrer en contact avec la préforme et de modifier sa forme.

9. Outil d'injection pour la fabrication de préformes, comprenant une plaque à cavités et une plaque à noyaux susceptibles d'être déplacées en un mouvement alternatif l'une par rapport à l'autre entre une position fermée dans laquelle les noyaux de la plaque à noyaux sont disposés à l'intérieur des cavités de la plaque à cavités et une position ouverte dans laquelle la plaque à cavités est éloignée de la plaque à noyaux davantage que dans la position fermée, où sont prévues en outre une plaque de prélèvement et une plaque de post-traitement, la plaque de prélèvement étant susceptible d'être introduite, dans la position ouverte, entre la plaque à noyaux et la plaque à cavités afin de recevoir les préformes fabriquées, la plaque de post-traitement comprenant une pluralité d'outils de manipulation et/ou de post-traitement et la plaque de post-traitement étant susceptible d'être déplacée en un mouvement alternatif par rapport à la plaque de prélèvement ou une plaque intermédiaire entre une position de post-traitement et une position d'attente, où, dans la position de post-traitement, au moins un outil de manipulation et/ou de post-traitement vient en contact avec une préforme maintenue par la plaque de prélèvement ou la plaque intermédiaire ou transporte du fluide dans celle-ci ou enlève du fluide de celle-ci, **caractérisé en ce que** la plaque de prélèvement et/ou la plaque intermédiaire et/ou la plaque de post-traitement est une plaque de manipulation (1) selon l'une des revendications 1 à 8.
